(19) Europäisches Patentamt
European Patent Office
Office européen des brevets

(11) **EP 4 163 869 A1**

(12) **EUROPEAN PATENT APPLICATION**

(43) Date of publication:
**12.04.2023 Bulletin 2023/15**

(21) Application number: **21202040.8**

(22) Date of filing: **11.10.2021**

(51) International Patent Classification (IPC):
**G06T 7/00** (2006.01)    **G06T 7/37** (2017.01)

(52) Cooperative Patent Classification (CPC):
**G06T 7/0004; G06T 7/37;** G06T 2207/10061;
G06T 2207/20056; G06T 2207/30148

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ASML Netherlands B.V.
5500 AH Veldhoven (NL)**

(72) Inventor: **KOOIMAN, Marleen
5500 AH Veldhoven (NL)**

(74) Representative: **ASML Netherlands B.V.
Corporate Intellectual Property
P.O. Box 324
5500 AH Veldhoven (NL)**

(54) **SEM IMAGE ALIGNMENT**

(57)    A method of determining offsets between a plurality of data sets, each data set representing a sampling area of a pattern formed on a sample, wherein each sampling area derives from a predetermined portion of a mask pattern, the method comprising:

detecting a fingerprint of the mask pattern in noise of the data sets; and
determining offsets based on the fingerprint of the mask pattern.

## Fig. 4

**Description**

TECHNICAL FIELD

The description herein relates to the field of image alignment, and in particular to scanning electron microscopy (SEM) image alignment.

BACKGROUND

In manufacturing processes of integrated circuits (ICs), unfinished or finished circuit components are inspected to ensure that they are manufactured according to design and are free of defects. Inspection systems utilizing optical microscopes or charged particle (e.g., electron) beam microscopes, such as a scanning electron microscope (SEM) can be employed. As the physical sizes of IC components continue to shrink, and their structures continue to become more complex, accuracy and throughput in metrology process, including dimension metrology, defect detection and inspection, become more important.

In order to fully analyze an image of a part of a sample, it is necessary to know accurately what part of the device pattern is represented in the image, e.g. to align multiple images of nominally identical patterns to each other. There are uncertainties in the placement of the pattern on the sample and uncertainties in the placement of the sample in the inspection system which can combine to give a significant uncertainty as to exactly what part of a device pattern is shown in a microscope image. Often, such uncertainty is resolved by reference to identifying landmarks in the image. However, that is not always possible. For example, where a device pattern has an area of straight lines of length greater than the dimension of the microscope image it has been necessary to add landmarks in order to align images of that pattern in the direction of the lines.

SUMMARY

According to a first aspect of the invention, there is provided a method of determining offsets between a plurality of data sets, each data set representing a sampling area of a pattern formed on a sample, wherein each sampling area derives from a predetermined portion of a mask pattern, the method comprising:

>   detecting a fingerprint of the mask pattern in noise of the data sets; and
>   determining offsets based on the fingerprint of the mask pattern.

According to a second aspect of the invention, there is provided an inspection method comprising:

>   using a scanning electron microscope to obtain a plurality of SEM images by scanning a plurality of copies of a predetermined pattern in one or more samples;
>   extracting a contour of a line in each of the plurality of SEM images to obtain a plurality of line contours;
>   determining an initial set of offsets for each of the line contours;
>   calculating a mean contour based on the line contours and the initial set of offsets; and
>   iteratively calculating an improved set of offsets that maximises the correlation between each of the contour lines and the mean contour and updating the mean contour.

According to a third aspect of the invention, there is provided a method of aligning images comprising:

>   receiving a plurality of images, each of the images including images of a same set of features of a sample, the features having been formed by use of a lithography system using a mask, wherein all of the features are parallel linear features having no landmarks in the image and formed using substantially the same portion of the mask, each of the features having a line edge roughness that includes a component that results from the mask and a stochastic component;
>   analyzing the images to derive data that corresponds to a first line edge roughness component that results from the mask; and
>   aligning the images based on the derived data.

According to a fourth aspect of the invention, there is provided a computer program product comprising a non-transitory computer readable medium having instructions recorded thereon, the instructions, when executed by a computer or a controller of a scanning electron microscope, implementing any of the methods described above.

According to a fourth aspect of the invention, there is provided a system comprising:

a scanning electron microscope (SEM) configured to scan with an electron beam and generate an image; and
a non-transitory machine-readable medium storing instructions which, when executed by a processor, cause the processor in co-operation with the SEM to perform any of the methods described above.

BRIEF DESCRIPTIONS OF FIGURES

Other advantages of the embodiments of the present disclosure will become apparent from the following description taken in conjunction with the accompanying drawings wherein are set forth, by way of illustration and example, certain embodiments of the present invention.

Fig. 1 is a schematic diagram illustrating an exemplary electron beam inspection (EBI) system, consistent with embodiments of the present disclosure.
Fig. 2 is a schematic diagram illustrating an exemplary electron beam tool, consistent with embodiments of the present disclosure that may be a part of the exemplary electron beam inspection system of Fig. 1.
Fig. 3 is a flow chart of an inspection method of an embodiment.
Fig. 4 is a flow chart of an alignment method of an embodiment.
Fig. 5 is a graph of cross-correlation vs offset for pairwise alignment of images of a set of test data.
Fig. 6 is a graph of cross-correlation vs offset for alignment of pairs of images vs a mean contour of ADI test data after one iteration.
Fig. 7 is a graph of cross-correlation vs offset for alignment of pairs of images vs a mean contour of ADI test data after three iterations.
Fig. 8 is a graph of cross-correlation vs offset for alignment of pairs of images vs a mean contour of AEI test data after one iteration.
Fig. 9 is a graph of cross-correlation vs offset for alignment of pairs of images vs a mean contour of AEI test data after five iterations.
Fig. 10 is a graph of power spectral density of the test data.

DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations. Instead, they are merely examples of apparatuses and methods consistent with aspects related to the disclosed embodiments as recited in the appended claims. For example, although some embodiments are described in the context of utilizing electron beams, the disclosure is not so limited. Other types of charged particle beams may be similarly applied. Furthermore, other imaging systems may be used, such as optical imaging, photo detection, x-ray detection, etc.

Electronic devices are constructed of circuits formed on a piece of silicon called a substrate. Many circuits may be formed together on the same piece of silicon and are called integrated circuits or ICs. The size of these circuits has decreased dramatically so that many more of them can fit on the substrate. For example, an IC chip in a smart phone can be as small as a thumbnail and yet may include over 2 billion transistors, the size of each transistor being less than 1/1000th the size of a human hair. Making these extremely small ICs is a complex, time-consuming, and expensive process, often involving hundreds of individual steps. Errors in even one step have the potential to result in defects in the finished IC, thereby rendering it useless. Thus, one goal of the manufacturing process is to avoid such defects to maximize the number of functional ICs made in the process, that is, to improve the overall yield of the process.

One component of improving yield is monitoring the chip making process to ensure that it is producing a sufficient number of functional integrated circuits. One way to monitor the process is to inspect the chip circuit structures at various stages of their formation. Inspection can be carried out using a scanning electron microscope (SEM). A SEM can be used to image these extremely small structures, in effect, taking a "picture" of the structures. The image can be used to determine if the structure was formed properly and also if it was formed in the proper location. If the structure is defective (e.g. the wrong shape, size or place), then the process can be adjusted so the defect is less likely to recur. It may be desirable to have higher throughput for defect detection and inspection processes to meet the requirements of IC manufacturers.

Some structures that are to be inspected involve large areas of a simple repeating pattern, such as parallel lines. Areas of parallel lines may be part of interconnect layers that are present in the final device. Also some features are formed in a two-step process in which continuous parallel lines are formed in one step and then "cut" in a second step to form shorter lines. Thus the continuous parallel lines do not survive into the finished product but it is still desired to inspect them before they are cut. These areas of parallel lines may be larger than the field of view of the inspection tool so that the image output by the inspection tool consists of a series of parallel lines extending across the image. Often the lines will be parallel to the sides of the image (e.g. extending in X or Y directions) but may also be diagonal.

Because of uncertainties in the placement of the pattern on the sample and in the placement of the sample in the inspection system and the lack of any identifying landmarks in an image consisting of straight, parallel lines it can be difficult to determine exactly what part of the device pattern has been imaged and to align multiple images in the direction of the lines. Knowing exactly what part of a pattern has been imaged and precisely aligning multiple images of different samples is important to properly diagnosing the cause of any variability in the printed pattern.

The disclosure herein describes, among others, methods and systems for aligning multiple SEM images to each other and thereby determining the relationship between the imaged part of the pattern and the mask use to form it. The inventor has realized that variations in the shape of the features in the image, which may be referred to as "noise", derive from several sources. Sources of noise may include: the mask; the lithography step which exposes a photoresist to the mask pattern; the chemical processes which are performed to develop the photoresist; the chemical or physical processes which transfer the pattern into the substrate, e.g. an etching process (where the inspection is after a pattern transfer step); and the imaging process. The inventor has realized that the noise from the lithography step, the chemical processes and the imaging is highly random (stochastic) and differs between images derived from different samples but the noise caused by the mask is quite consistent between images because it derives from minute variations in the pattern on the mask, which do not change over time, or only very slowly. Therefore the present disclosure describes mathematical methods for comparing multiple images to find the "fingerprint" of the mask in the noise and thereby align the images to each other and to the mask.

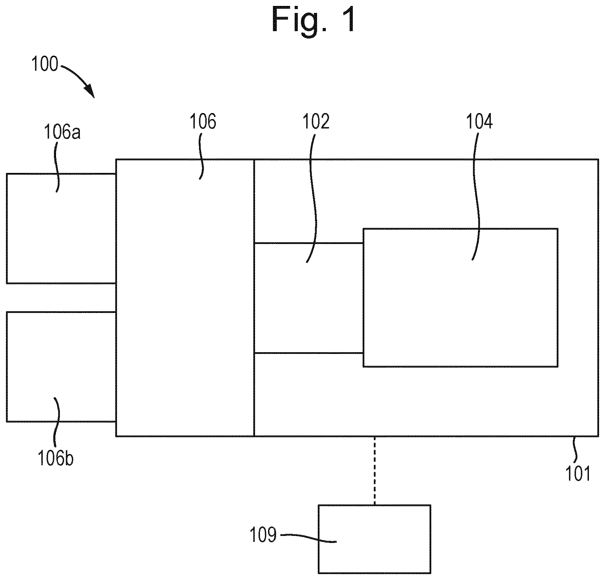

Reference is now made to Fig. 1, which illustrates an exemplary electron beam inspection (EBI) system 100 consistent with embodiments of the present disclosure. EBI system 100 may be used for imaging. As shown in Fig. 1, EBI system 100 may include a main chamber 101, a load/lock chamber 102, an electron beam tool 104, and an equipment front end module (EFEM) 106. Electron beam tool 104 is located within main chamber 101. While the description and drawings are directed to an electron beam, it is appreciated that the embodiments are not used to limit the present disclosure to specific charged particles. The methods described herein may be applied to images derived from any form of microscope, including optical microscopes.

EFEM 106 may include a first loading port 106a and a second loading port 106b. EFEM 106 may include additional loading port(s). First loading port 106a and second loading port 106b receive wafer front opening unified pods (FOUPs) that contain wafers (e.g., semiconductor wafers or wafers made of other material(s)) or samples to be inspected (wafers and samples may be used interchangeably).

One or more robotic arms (not shown) in EFEM 106 may transport the wafers to load/lock chamber 102. Load/lock chamber 102 is connected to a load/lock vacuum pump system (not shown) which removes gas molecules in load/lock chamber 102 to reach a first pressure below the atmospheric pressure. After reaching the first pressure, one or more robotic arms (not shown) may transport the wafer from load/lock chamber 102 to main chamber 101. Main chamber 101 is connected to a main chamber vacuum pump system (not shown) which removes gas molecules in main chamber 101 to reach a second pressure below the first pressure. After reaching the second pressure, the wafer is subject to inspection by electron beam tool 104. Electron beam tool 104 may be a single-beam system or a multi-beam system.

A controller 109 is electronically connected to electron beam tool 104 and may be electronically connected to other components as well. Controller 109 may be a computer configured to execute various controls of EBI system 100. Controller 109 may also include processing circuitry configured to execute various signal and image processing functions. While controller 109 is shown in Fig. 1 as being outside of the structure that includes main chamber 101, load/lock chamber 102, and EFEM 106, it is appreciated that controller 109 may be a part of the structure.

In some embodiments, controller 109 may include one or more processors (not shown). A processor may be a generic or specific electronic device capable of manipulating or processing information. For example, the processor may include any combination of any number of a central processing unit (or "CPU"), a graphics processing unit (or "GPU"), an optical processor, a programmable logic controllers, a microcontroller, a microprocessor, a digital signal processor, an intellectual property (IP) core, a Programmable Logic Array (PLA), a Programmable Array Logic (PAL), a Generic Array Logic (GAL), a Complex Programmable Logic Device (CPLD), a Field-Programmable Gate Array (FPGA), a System On Chip (SoC), an Application-Specific Integrated Circuit (ASIC), and any type circuit capable of data processing. The processor may also be a virtual processor that includes one or more processors distributed across multiple machines or devices coupled via a network.

In some embodiments, controller 109 may further include one or more memories (not shown). A memory may be a generic or specific electronic device capable of storing codes and data accessible by the processor (e.g., via a bus). For example, the memory may include any combination of any number of a random-access memory (RAM), a read-only memory (ROM), an optical disc, a magnetic disk, a hard drive, a solid-state drive, a flash drive, a security digital (SD) card, a memory stick, a compact flash (CF) card, or any type of storage device. The codes may include an operating system (OS) and one or more application programs (or "apps") for specific tasks. The memory may also be a virtual memory that includes one or more memories distributed across multiple machines or devices coupled via a network.

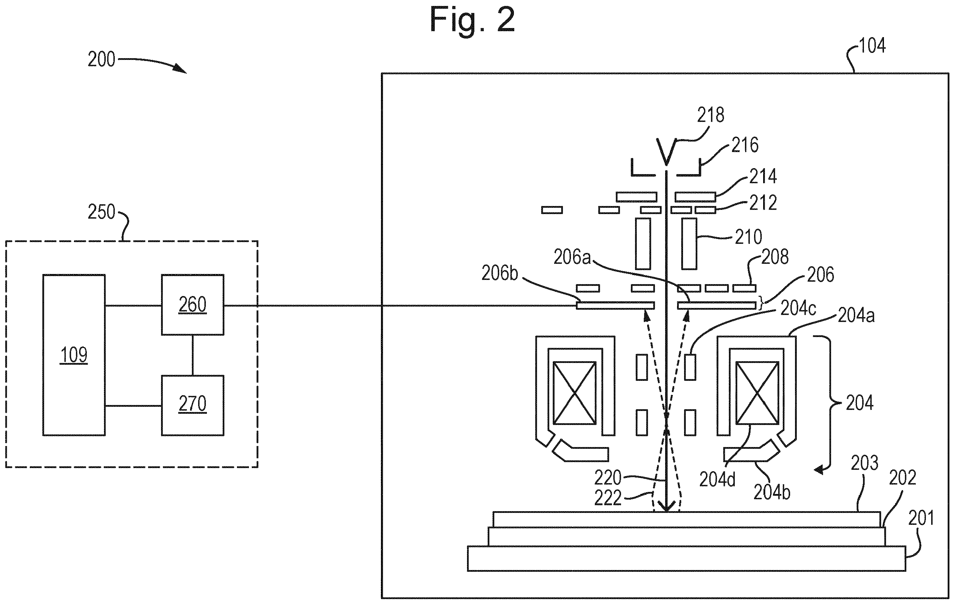

Reference is now made to Fig. 2, which illustrates an exemplary imaging system 200 according to embodiments of the present disclosure. Electron beam tool 104 of Fig. 2 may be configured for use in EBI system 100. Electron beam tool 104 may be a single beam apparatus or a multi-beam apparatus. As shown in Fig. 2, electron beam tool 104 may include a motorized sample stage 201, and a wafer holder 202 supported by motorized sample stage 201 to hold a wafer 203 as an example of a sample to be inspected. Electron beam tool 104 may further include an objective lens assembly 204, an electron detector 206 (which includes electron sensor surfaces 206a and 206b), an objective aperture 208, a condenser lens 210, a beam limit aperture 212, a gun aperture 214, an anode 216, and a cathode 218. Objective lens assembly 204, in some embodiments, may include a modified swing objective retarding immersion lens (SORIL), which includes a pole piece 204a, a control electrode 204b, a deflector 204c, and an exciting coil 204d.

A primary electron beam 220 is emitted from cathode 218 by applying an acceleration voltage between anode 216 and cathode 218. Primary electron beam 220 passes through gun aperture 214 and beam limit aperture 212, both of which may determine the size of electron beam entering condenser lens 210, which resides below beam limit aperture 212. Condenser lens 210 focuses primary electron beam 220 before the beam enters objective aperture 208 to set the size of the electron beam before entering objective lens assembly 204. Deflector 204c deflects primary electron beam 220 to facilitate beam scanning on the wafer. For example, in a scanning process, deflector 204c may be controlled to deflect primary electron beam 220 sequentially onto different locations of top surface of wafer 203 at different time points, to provide data for image reconstruction for different parts of wafer 203. Moreover, deflector 204c may also be controlled to deflect primary electron beam 220 onto different sides of wafer 203 at a particular location, at different time points, to provide data for stereo image reconstruction of the wafer structure at that location. Further, in some embodiments, anode 216 and cathode 218 may generate multiple primary electron beams 220, and electron beam tool 104 may include a plurality of deflectors 204c to project the multiple primary electron beams 220 to different parts/sides of the wafer at the same time, to provide data for image reconstruction for different parts of wafer 203.

In many cases, the electron beam(s) of an SEM are scanned across the sample in a two-dimensional raster pattern. The raster pattern comprises a slow movement in a first direction and a fast movement in a second direction. The second direction is perpendicular, or nearly perpendicular, to the first direction. The first direction may be referred to as the main-scanning direction or the slow scan direction and the second direction as the sub-scanning direction or fast scan direction. Unless otherwise specified, the scan direction referred to herein is the fast scan direction. Scanning can also be performed mechanically, through stage movement, or by a combination of mechanical scanning and scanning by a deflector. For example, the slow scan may be performed by stage movement and the fast scan by the deflector.

Exciting coil 204d and pole piece 204a generate a magnetic field that begins at one end of pole piece 204a and terminates at the other end of pole piece 204a. A part of wafer 203 being scanned by primary electron beam 220 may be immersed in the magnetic field and may be electrically charged, which, in turn, creates an electric field. The electric field reduces the energy of impinging primary electron beam 220 near the surface of wafer 203 before it collides with wafer 203. Control electrode 204b, being electrically isolated from pole piece 204a, controls an electric field on wafer 203 to prevent micro-arching of wafer 203 and to ensure proper beam focus.

A secondary electron beam 222 may be emitted from the part of wafer 203 upon receiving primary electron beam 220. Secondary electron beam 222 may comprise secondary electrons, backscatter electrons and other electrons emitted by the wafer 203 as discussed below. Secondary electron beam 222 may form a beam spot on sensor surfaces 206a and 206b of electron detector 206. Electron detector 206 may generate a signal (e.g., a voltage, a current, or the like.) that represents an intensity of the beam spot, and provide the signal to an image processing system 250. The intensity of secondary electron beam 222, and the resultant beam spot, may vary according to the external or internal structure of wafer 203. Moreover, as discussed above, primary electron beam 220 may be projected onto different locations of the top surface of the wafer or different sides of the wafer at a particular location, to generate secondary electron beams 222 (and the resultant beam spot) of different intensities. Therefore, by mapping the intensities of the beam spots with the locations of wafer 203, the processing system may reconstruct an image that reflects the internal or surface structures of wafer 203.

Imaging system 200 may be used for inspecting a wafer 203 on sample stage 201 and includes an electron beam tool 104, as discussed above. Imaging system 200 may also include an image processing system 250 that includes an image acquirer 260, storage 270, and controller 109. Image acquirer 260 may include one or more processors. For example, image acquirer 260 may include a computer, server, mainframe host, terminals, personal computer, any kind of mobile computing devices, and the like, or a combination thereof. Image acquirer 260 may connect with a detector 206 of electron beam tool 104 through a medium such as an electrical conductor, optical fiber cable, portable storage media, IR, Bluetooth, internet, wireless network, wireless radio, or a combination thereof. Image acquirer 260 may receive a signal from detector 206 and may construct an image. Image acquirer 260 may thus acquire images of wafer 203. Image acquirer 260 may also perform various post-processing functions, such as generating contours, superimposing indicators on an acquired image, and the like. Image acquirer 260 may perform adjustments of brightness and contrast, or the like of acquired images. Storage 270 may be a storage medium such as a hard disk, cloud storage, random access memory (RAM), other types of computer readable memory, and the like. Storage 270 may be coupled with image acquirer 260 and may be used for saving scanned raw image data as original images, and post-processed images. Image acquirer 260 and storage 270 may be connected to controller 109. In some embodiments, image acquirer 260, storage 270, and controller 109 may be integrated together as one control unit.

In some embodiments, image acquirer 260 may acquire one or more images of a sample based on an imaging signal received from detector 206. An imaging signal may correspond to a scanning operation for conducting charged particle imaging. An acquired image may be a single image including a plurality of imaging areas. The single image may be stored in storage 270. The single image may be an original image that may be divided into a plurality of regions. Each of the regions may include one imaging area containing a feature of wafer 203.

In some embodiments, the SEM image may be an individual SEM image generated by a single scan of primary electron beam 220 on wafer 203 along a single scan direction. In some embodiments, the SEM image may be a first average SEM image generated by averaging multiple SEM images, each generated by a single scan of primary electron beam 220 on wafer 203 along the same scan direction. Embodiments of the present disclosure are not limited to any specific SEM image generated by any specific method, and the disclosed methods and systems may be applied to SEM images that include, but are not limited to, the examples herein.

As discussed above, the present disclosure provides a method to align multiple images of a target pattern comprising lines in order to decompose the power spectral density (PSD) of such a pattern of lines without using a special mask with alignment features. An equation that can be maximized to determine the relative displacement of the images is disclosed. This equation can be solved efficiently in an iterative manner. The maximum is well-defined, and can be obtained. The maximum value can be used directly in the decomposition, and the exact correct displacement values are thus not critical for the decomposition.

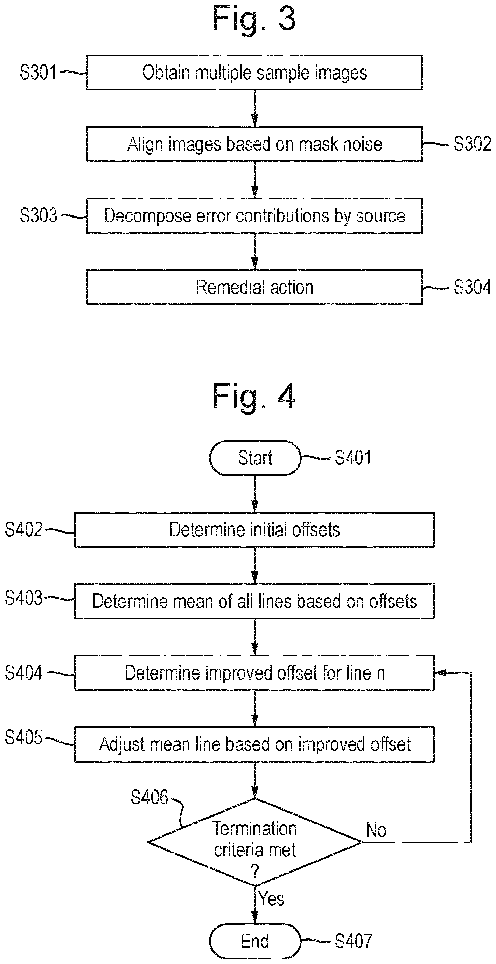

An inspection method of an embodiment is depicted in Fig. 3. In step S301, a sample or a plurality of samples is imaged to obtain a plurality of sample images. Each sample has a pattern thereon which has been formed using the same mask (or reticle). The pattern comprises an area of straight parallel lines that is larger than the sample images. Each sample may have multiple copies of the pattern, in which case multiple sample images per sample may be taken. The location of the images is determined so that, as far as possible, each image is derived from the same predetermined part of the mask. Imaging may be performed using a scanning electron microscope as described above with reference to Figs. 1 and 2, another type of scanning electron microscope (such as a multi-beam SEM) or an optical microscope. The images can be obtained after development (AI) or after pattern transfer. Desirably images of the same pattern locations both after development and after pattern-transfer are obtained.

In step S302, the plurality of sample images are aligned to one another by reference to mask noise that is common to all the images. As discussed further below, the alignment can be performed by various mathematical techniques that look for correlation between the plurality of images and determine the offsets between images. In most cases, it can be assumed that the uncertainty in the image position is less than the spacing between lines, so that only the offsets in the direction of the lines need to be determined. An iterative approach, based on an initial estimate of the offsets can be used.

Having aligned the images, it is possible to decompose the noise in the image to determine its sources. This is done in step S303. In step S304, remedial action is taken where desirable. Remedial action may include one or more of: adjusting a parameter of the lithographic process, adjusting a parameter of a pattern transfer process; adjusting a parameter of an imaging process; repairing or replacing the mask; reworking the samples; and scrapping samples. A process that has a parameter adjusted may be a process that is subsequently applied to the samples that have been imaged (e.g. so that a compensating variation is introduced in a layer subsequent to the layer that has been inspected) or a process that is applied to subsequent samples to improve throughput and/or yield.

An example of decomposing error contributions by source (step S303) is to decompose the variance of the displacement $y^{ijk}(x)$ of a line i located in target portion (e.g. die) j in image k into contributions deriving from the mask, random (shot) noise and imaging (SEM) noise. The invention may be applied to one or both edges of a linear feature or to a centerline or average of the two edges. Where an image contains multiple lines, the invention can be applied to one or more of the lines in the image, collectively or independently. Extraction of contours to identify edges can be performed with any suitable algorithm. Various algorithms specially adapted for extracting edges from SEM images are known in the art and may be based on local or global thresholds; maximum gradient detection or self-referencing algorithms, for example. Approaches using machine learning techniques are also possible.

The variation of the edge placement can be expressed as:

$$y^{ijk}(x) = \overline{y(x)} + \delta y^i_{mask}(x) + \delta y^{ij}_{SN}(x) + \delta y^{ijk}_{SEM}(x) \qquad (1)$$

where y(x) is the average y position of the edge, $\delta y^i_{mask}(x)$ is the mask contribution, $\delta y^{ij}_{SN}(x)$ is the random noise contribution and $\delta y^{ijk}_{SEM}(x)$ is the imaging contribution.

For simplicity, it is assumed that all images in the data set derive from the same mask location. This implies that die *j* and image *k* together determine the image. The images can derive from samples that have been scanned after resist has been developed so the mask pattern is detectable in the resist or after the pattern has been transferred to the substrate by a process step, such as an etch. By applying the invention to images derived from samples before pattern transfer and after pattern transfer, information about the noise introduced by the pattern transfer step can be the same. The images need not be derived from the same samples pre- and post-pattern transfer.

The stochastic effects in the resist or shot noise are defined very generically here. They include all possible effects caused by nondeterministic nature of physical and chemical processes happening during exposure, development, and etch. The stochastic effects in resist include photon shot noise and acid noise. Photon shot noise is the uncertainty in the amount of photons absorbed by an exposed area. Acid noise is uncertainty in the amount of acids produced by one photon. In EUV lithography the relative variation of locally received photons and locally produced acids is significant and leads to a significant variation of the resulting dimensions of the developed patterns.

We assume that the expected value of the line is zero, i.e.

$$\mathbb{E}[y(x)] = 0.$$

If not, an average value can be subtracted from y(x) to make it so. Furthermore, we define the autocovariance function as:

$$r(\Delta x) = \mathbb{E}[y(x)y(x - \Delta x)] \qquad (2)$$

which is assumed to only depend on the distance Δ*x*. The power spectral density is then defined as

$$S(\omega) = \int_{-\infty}^{\infty} d\Delta x \, r(\Delta x)e^{-i\omega\Delta x} \qquad (3)$$

Our goal is to decompose $S(\omega)$ and $r(\Delta x)$ into a mask-, random noise and imaging contribution.

Following an analysis of variance (ANOVA) approach, the mask, random noise and imaging contributions of $r(\Delta x)$ can be expressed in the mean squares, applying the linear nested model as described in Montgomery, D.C., "Design and Analysis of Experiment," John Wiley & Sons, Inc. (2009) :

$$MC_{mask}(\Delta x) = r(\Delta x)_{SEM} + S \, r(\Delta x)_{SN} + M \, S \, r(\Delta x)_{mask} \qquad (4)$$

$$MC_{SN}(\Delta x) = r(\Delta x)_{SEM} + S \, r(\Delta x)_{SN} \qquad (5)$$

$$MC_{SEM}(\Delta x) = r(\Delta x)_{SEM} \qquad (6)$$

where MC is the mean covariance, S is the number of images at the same sample (e.g. wafer) location, M is the number of sample regions (e.g. dies) at which the same portion of the mask is measured and SN is the shot noise.

For the mean squares, we now explicitly include the alignment of the images here. Each image has a single shift $d_{j,k}$ with respect to an arbitrary reference. For the imaging mean square one finds:

$$MC_{SEM}(\Delta x) = \frac{S}{S-1} \left( \int dx \, \langle y^{ijk}(x - d_{j,k}) y^{ijk}(x - \Delta x - d_{j,k}) \rangle_{ijk} - \int dx \langle \langle y^{ijk}(x - d_{j,k}) \rangle_k \langle y^{ijk'}(x - \Delta x - d_{j,k'}) \rangle_{k'} \rangle_{ij} \right) \qquad (8)$$

Equivalently, we find for the random noise mean square:

$$MC_{SN}(\Delta x) = S\frac{M}{M-1}\left(\int dx \, \langle\langle y^{ijk}(x - d_{j,k})\rangle_k \langle y^{ijk'}(x - \Delta x - d_{j,k'})\rangle_{k'}\rangle_{ij} - \right.$$

$$\left. \int dx \langle\langle y^{ijk}(x - d_{j,k})\rangle_{jk} \langle y^{ij'k'}(x - \Delta x - d_{j',k'})\rangle_{j'k'}\rangle_i \right) \tag{9}$$

Now, the second term is a product of averages over image groups at the same mask location.

Finally, the mask mean square reads:

$$MC_{mask}(\Delta x) = MS\frac{N}{N-1}\left(\int dx \, \langle\langle y^{ijk}(x - d_{j,k})\rangle_{jk} \langle y^{ij'k'}(x - \Delta x - d_{j',k'})\rangle^*_{j'k'}\rangle_i - \right.$$

$$\left. \int dx \langle y^{ijk}(x - d_{j,k})\rangle_{ijk} \langle y^{i'j'k'}(x - \Delta x - d_{j',k'})\rangle_{i'j'k'} \right) \tag{10}$$

The mean over all line displacements in an image ($\langle y^{ijk}(x - d_{j,k})\rangle_i$) is 0, as there is no fixed reference in the image. The second term thus vanishes.

As the Fourier transform is a linear operation, equations for the components of $S_c(\omega)$ can be obtained by Fourier transforming the above equations:

$$\frac{\widetilde{MC}_{mask}(\omega) - \widetilde{MC}_{SN}(\omega)}{MS} = S_c(\omega)_{mask} \tag{11}$$

$$\frac{\widetilde{MC}_{SN}(\omega) - \widetilde{MC}_{SEM}(\omega)}{S} = S_c(\omega)_{SN} \tag{12}$$

$$\widetilde{MC}_{SEM}(\omega) = S_c(\omega)_{SEM} \tag{13}$$

With

$$\widetilde{MC}_{SEM}(\omega) = \frac{S}{S-1}\left(\langle|\tilde{y}^{ijk}(\omega)e^{-i\omega d_{j,k}}|^2\rangle_{ijk} - \langle|\langle\tilde{y}^{ijk}(\omega)e^{-i\omega d_{j,k}}\rangle_k|^2\rangle_{ij}\right) \tag{14}$$

$$\widetilde{MC}_{SN}(\omega) = S\frac{M}{M-1}\left(\langle|\langle\tilde{y}^{ijk}(\omega)e^{-i\omega d_{j,k}}\rangle_k|^2\rangle_{ij} - \langle|\langle\tilde{y}^{ijk}(\omega)e^{-i\omega d_{j,k}}\rangle_{jk}|^2\rangle_i\right) \tag{15}$$

$$\widetilde{MC}_{mask}(\omega) = MS\frac{N}{N-1}\langle|\langle\tilde{y}^{ijk}(\omega)e^{-i\omega d_{j,k}}\rangle_{jk}|^2\rangle_i \tag{16}$$

where $\widetilde{MC}$ indicates the Fourier Transform of $MC$.

From the expressions for the mean squares, it thus follows that we need to calculate the contour variance in single images, of means over image pairs, and means over all images to determine the decomposition of $S_c(\omega)$. To that end, we need the image displacements $d_{j,k}$.

Approaches to perform the alignment of images (step S302) and thereby determine the image displacements $d_{j,k}$ will now be described. Broadly speaking, to find the shift between a pair of images, one should find the shift value corresponding to the maximum correlation between the images. To this end, one should maximize the covariance between contour fluctuations of two images. Note that there is also a variant with normalized Fourier transforms (phase correlation).

For a single mask location, we have multiple images, and hence we have consistency relations between shifts of image pairs. Each image has a single shift $d_{j,k}$ with respect to a golden reference, and the shifts between images follow from this. This implies that there are fewer unknowns than there are image pairs, which increases the signal-to-noise ratio. If both ADI and AEI images have been obtained, once the shifts between ADI images and between AEI images at the same mask location have been optimized, the average of the ADI images can be aligned with respect to the average of the AEI images. Again, there is just one possible shift, and hence the signal-to-noise ratio is improved.

To obtain the shifts, we maximize the integral over $\Delta x$ for the variance of means of image groups in the equations above. First, we find for the mean of each group of images at the same wafer location the following equation:

$$\max_{d_{j,k}} \int d\Delta x \int dx \langle\langle y^{ijk}(x - d_{j,k})\rangle_k \langle y^{ijk'}(x - d_{j,k'} - \Delta x)\rangle_{k'}\rangle_i$$
$$= \max_{d_{j,k}} \left( \mathcal{F}^{-1}\left[\langle|\langle\tilde{y}^{ijk}(\omega)e^{-i\omega d_{j,k}}\rangle_k|^2\rangle_i\right](0) \right) \qquad (17)$$

where $\mathcal{F}$ is the Fourier transform operator (note the square brackets that indicate that F is an operator) and $\mathcal{F}^{-1}$ is the inverse fourier transform operator.

Note that this equation contains terms of the image with itself. The resulting correlation of the image with itself is however independent of the shift of the image with respect to the reference, and these terms do not change the optimum $d_{j,k}$. Only the cross-terms thus contribute, and we only have one such term (as we have groups of two images). Therefore, this equation is equivalent to the alignment of two images. The solution can be obtained using a single FFT. Note that there is no absolute reference for image placement; only the relative displacement $d_{j,1} - d_{j,2}$ is found.

The next step is to consider the mean of all images obtained at the same mask location. We find

$$\max_{d_{j,k}} \int d\Delta x \int dx \langle\langle y^{ijk}(x - d_{j,k})\rangle_{j,k} \langle y^{ijk'}(x - d_{j',k'} - \Delta x)\rangle_{j',k'}\rangle_i$$
$$= \max_{d_{j,k}} \left( \mathcal{F}^{-1}\left[\langle|\langle\tilde{y}^{ijk}(\omega)e^{-i\omega d_{j,k}}\rangle_{j,k}|^2\rangle_i\right](0) \right) \qquad (18)$$

While equation (17) has only one unknown, and can thus be solved by a single FFT, equation (18) has many unknowns. Equation (18) can be written as sums of inverse Fourier transforms between images, which can be calculated quickly with a FFT. However, these inverse Fourier transforms are noisy, spikey signals, and hence the numerical optimization is hard for algorithms that use the derivative. If the objective function is calculated for all possible (discrete) $d_{j,k}$, this is a discrete optimization problem. Discrete optimization problems are known to be NP-hard (at least the memory usage grows exponentially with the amount of variables) and so this approach may involve excessive computation time and resources if the number of images is large.

In addition, equation (18) also includes correlations between averages of groups of images, i.e. the correlation considered in equation (17). It should be noted that the correlation between the two groups is much stronger than between images at the same mask location. This can give problems in the numerical optimization.

To overcome the problem caused by correlation between groups, it is proposed to only optimize for the common shift of two images, and not the internal shift in a pair. We first change variables: $d_{j,k}$ is the sum of the shift per image pair and a shift between the images of a pair, so $d_{j,k} = d_j \pm d_j^{SEM}$. We then optimize $d_j^{SEM}$ with the first equation, and keep it fixed when we use the second equation to find the $d_j$'s.

To overcome the problem of excessive computation time and resources, an iterative approach is used. A reasonably good initial guess for all $d_j$'s can be obtained. Now, we only maximize with respect to one $d_j$, and hence we only perturb with $\Delta d_j$. Leaving out all terms independent of $\Delta d_j$ then yields for the maximization:

$$\max_{\Delta d_j} 2\,Re\left( \mathcal{F}^{-1}\left[\langle\langle\tilde{y}^{ijk}(\omega)e^{-i\omega d_{j,k}}\rangle_k \langle\tilde{y}^{ij'k}(\omega)e^{-i\omega d_{j',k}}\rangle^*_{\substack{j'\neq j\\k}}\rangle_i\right](\Delta d_j) \right) \qquad (19)$$

This can easily be determined with a single FFT. As sums over images can be stored and updated iteratively, the computational load for the optimization for a single $d_j$ is independent of the number of images. The process, as shown in Figure 4, starts by determining S402 initial offsets d_j for all lines and determining a mean line S403. Then an offset for the first line that maximizes the value of expression (19), keeping all others constant, is obtained S404 and the mean line updated S405. At step S406 it is checked whether termination criteria have been met and if not steps S404 and S405 are repeated for the next line. After all lines have been processed, the loop starts again with the first.

Even when lines have been processed already, maximizing expression (19) will likely result in an updated offset because the mean line will have changed as a result of updates to the offsets of other lines. Termination criteria may include that all lines have been processed a certain number of times, e.g. 2 to 5 times, or that the change in offsets for the latest iteration is less than a threshold. The computational load for this approach thus scales linearly with the number of images (degrees of freedom), and memory usage is reduced. A possible variation of this method is to hold the mean line constant until all lines have been processed and then update it, but this method sometimes does not converge on a stable solution.

The reasonably good initial guess for the $d_j$'s is derived from knowledge of the quality of the hardware alignment of the SEM itself. If this is not sufficient, pairwise alignment with respect to the first image can be performed instead. Note that as long as the majority of the images are reasonably well aligned an accidental mis-alignment is not severe.

The above exemplary process is based on contour lines extracted from pixel encoded images output by the SEM however it is also possible to perform the method based on pixel values of the whole or part(s) of the image. If the level of mask noise is low compared to the stochastic noise levels, a higher number of images may be required to achieve a sufficient signal to noise ratio. The images are desirably aligned in the direction perpendicular to the linear features prior to the process of alignment in the direction parallel to the linear features.

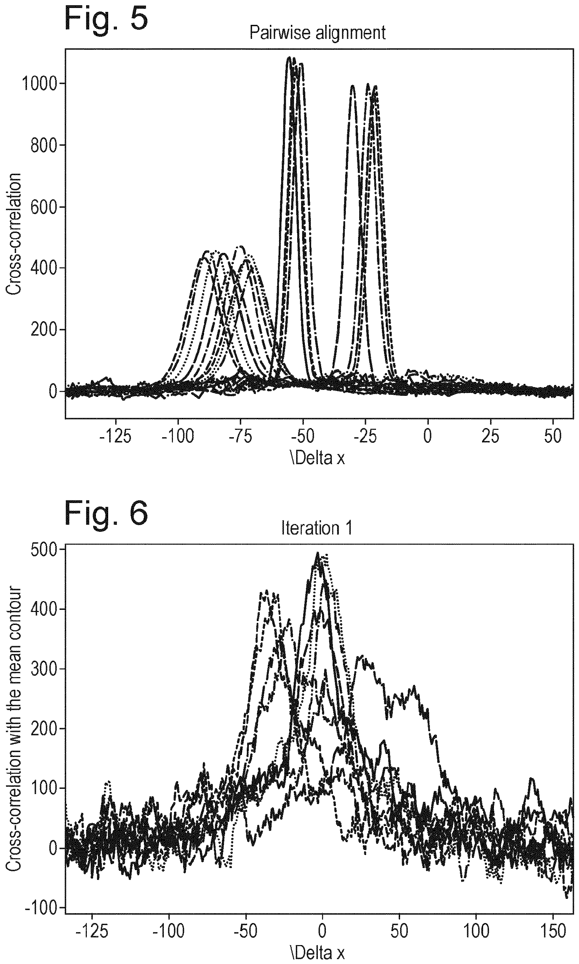

Figs. 5 to 10 show results of an alignment method according to an embodiment. Fig. 5 shows the cross-correlation between pairs of images in a trial dataset of ADI and AEI images obtained from a test wafer as a function of offset. It will be seen that a single strong peak, much larger than background noise, is present for all image pairs, but at different offset values. The data set contained both AEI and ADI images, with the ADI images showing higher and narrower correlation peaks.

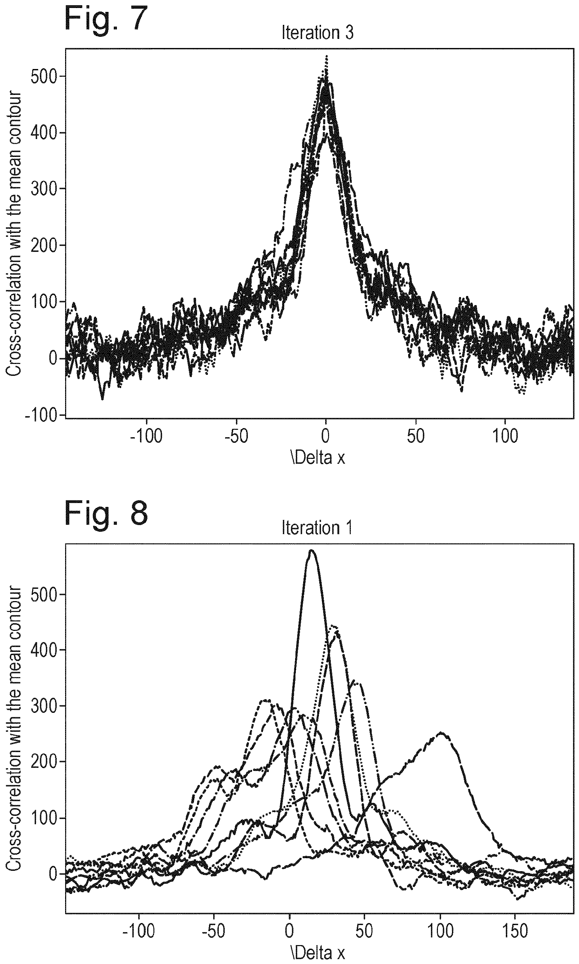

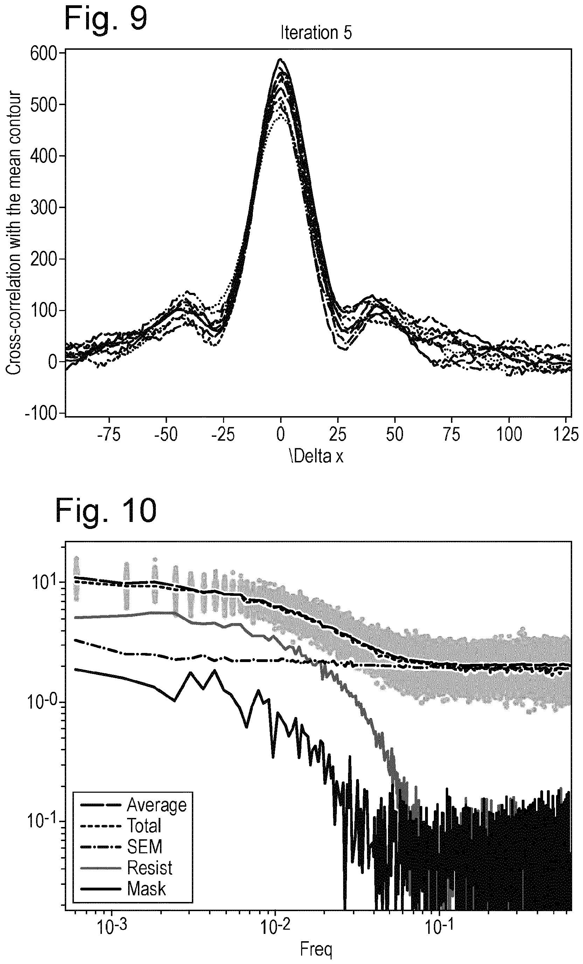

Figs. 6 to 9 show cross-correlation of individual images with a mean contour. In Fig. 6 the result in the first iteration is shown for 18 ADI images while Fig. 7 shows the results after three iterations, showing a quick improvement. Figs. 8 & 9 show results for 18 AEI images after one and five iterations respectively. Each iteration entails consecutive alignment of all image pairs, hence nine lines are shown in the graphs.

Fig. 10 shows the results of decomposing the noise into different sources, after the alignment process has been carried out. It can be seen that random (shot) noise originating from the SEM dominates at high frequencies but that at lower frequencies mask and resist noise is more important.

The alignment methods disclosed herein may also be used for other purposes, e.g. in stitching together overlapping images.

Methods and systems described herein may be advantageously applied to measurements of critical dimension (CD) and/or critical dimension uniformity (CDU). Measurements may be performed after development (referred to as After Development Inspection or ADI) or after etch (After Etch Inspection or AEI). Measurements may be taken to locate extreme variations as well as to determine statistical measurements such as standard deviation.

Images aligned by methods and systems described herein are suitable as input to analysis of variation (ANOVA) processes in order to decompose variations, e.g. into variability on the mask, variability due to photon- and acid shot noise, and SEM measurement noise. Methods described herein can improve outcomes of ANOVA techniques by accurately aligning the images without the need for introduction of a defect or other landmark to align the images. Landmarks may include changes in direction of the lines, gaps in the lines, ends of lines or intersections of the lines with other features.

Relative dimensions of components in drawings may be altered for clarity. Within the following description of drawings, the same or like reference numbers refer to the same or like components or entities, and only the differences with respect to the individual embodiments are described.

As used herein, unless specifically stated otherwise, the term "or" encompasses all possible combinations, except where infeasible. For example, if it is stated that a component may include A or B, then, unless specifically stated otherwise or infeasible, the component may include A, or B, or A and B. As a second example, if it is stated that a component may include A, B, or C, then, unless specifically stated otherwise or infeasible, the component may include A, or B, or C, or A and B, or A and C, or B and C, or A and B and C.

A non-transitory computer readable medium may be provided that stores instructions for a processor of a controller to carry out image inspection, image acquisition, activating charged-particle source, adjusting electrical excitation of stigmators, adjusting landing energy of electrons, adjusting objective lens excitation, adjusting secondary electron detector position and orientation, stage motion control, beam separator excitation, applying scan deflection voltages to beam deflectors, receiving and processing data associated with signal information from electron detectors, configuring an electrostatic element, detecting signal electrons, adjusting the control electrode potential, adjusting the voltages applied to the electron source, extractor electrode, and the sample, etc. Common forms of non-transitory media include, for example, a floppy disk, a flexible disk, hard disk, solid state drive, magnetic tape, or any other magnetic data storage medium, a Compact Disc Read Only Memory (CD-ROM), any other optical data storage medium, any physical medium with patterns of holes, a Random Access Memory (RAM), a Programmable Read Only Memory (PROM), and Erasable Programmable Read Only Memory (EPROM), a FLASH-EPROM or any other flash memory, Non-Volatile Random Access Memory (NVRAM), a cache, a register, any other memory chip or cartridge, and networked versions of the same.

Exemplary embodiments of the invention are described in the following numbered clauses:

A method of determining offsets between a plurality of data sets, each data set representing a sampling area of a pattern formed on a sample, wherein each sampling area derives from a predetermined portion of a mask pattern, the method comprising:

detecting a fingerprint of the mask pattern in noise of the data sets; and
determining offsets based on the fingerprint of the mask pattern.

2. A method according to clause 1 wherein detecting a fingerprint of the mask pattern comprises determining correlations between the data sets for different trial offset values.

3. A method according to clause 2 wherein determining correlations comprises determining correlations between pairs of data sets and an average data set.

4. A method according to clause 2 or 3 wherein determining correlations comprises using a fast Fourier transform.

5. A method according to clause 2, 3 or 4 wherein determining correlations is an iterative process.

6. A method according to any one of the preceding clauses wherein the fingerprint of the mask pattern results from noise in the mask pattern.

7. A method according to any one of the preceding clauses wherein the mask pattern comprises a series of continuous parallel lines extending across the sampling areas.

8. A method according to clause 6 wherein the data sets represent contours of the continuous parallel lines in the sampling areas.

9. A method according to any one of the preceding clauses further comprising decomposing noise in the datasets based on the offsets.

10. A method according to any one of the preceding clauses wherein at least one of the data sets represents a pattern formed in resist on a substrate or a pattern that has been transferred into the substrate.

11. A method according to any one of the preceding clauses wherein at least one of the data sets represents a pattern formed in resist on a substrate and at least another of the data sets represents a pattern that has been transferred into the substrate.

12. A method according to clause 11 further comprising determining a characteristic of a pattern transfer process based on the data sets that represent a pattern formed in resist on a substrate and the data sets that represent a pattern that has been transferred into the substrate and the offsets.

13. An inspection method comprising:

using a scanning electron microscope to obtain a plurality of SEM images by scanning a plurality of copies of a predetermined pattern in one or more samples;
extracting a contour of a line in each of the plurality of SEM images to obtain a plurality of line contours;
determining an initial set of offsets for each of the line contours;
calculating a mean contour based on the line contours and the initial set of offsets; and
iteratively calculating an improved set of offsets that maximises the correlation between each of the contour lines and the mean contour and updating the mean contour.

14. A method according to clause 13 wherein determining an initial set of offsets is based on knowledge of the scanning electron microscope.

15. A method according to clause 13 wherein determining an initial set of offsets comprises determining offsets between a selected one of the line contours and each other one of the line contours.

16. A method according to clause 13, 14 or 15 wherein iteratively calculating comprises from 2 to 5 iterations for each of the line contours,

17. A method of aligning images comprising:

receiving a plurality of images, each of the images including images of a same set of features of a sample, the features having been formed by use of a lithography system using a mask, wherein all of the features are parallel linear features having no landmarks in the image and formed using substantially the same portion of the mask, each of the features having a line edge roughness that includes a component that results from the mask and a stochastic component;
analyzing the images to derive data that corresponds to a first line edge roughness component that results from the mask; and
aligning the images based on the derived data.

18. A computer program product comprising a non-transitory computer readable medium having instructions recorded thereon, the instructions, when executed by a computer or a controller of a scanning electron microscope, implementing the method of any of the above clauses.

A system comprising:

a scanning electron microscope (SEM) configured to scan with an electron beam and generate an image; and a non-transitory machine-readable medium storing instructions which, when executed by a processor, cause the processor in co-operation with the SEM to perform the method of anyone of clauses 1 to 17.

It will be appreciated that the embodiments of the present disclosure are not limited to the exact construction that has been described above and illustrated in the accompanying drawings, and that various modifications and changes may be made without departing from the scope thereof. The present disclosure has been described in connection with various embodiments, other embodiments of the invention will be apparent to those skilled in the art from consideration of the specification and practice of the invention disclosed herein. It is intended that the specification and examples be considered as exemplary only, with a true scope and spirit of the invention being indicated by the following claims.

The descriptions above are intended to be illustrative, not limiting. Thus, it will be apparent to one skilled in the art that modifications may be made as described without departing from the scope of the claims set out below.

**Claims**

1. A method of determining offsets between a plurality of data sets, each data set representing a sampling area of a pattern formed on a sample, wherein each sampling area derives from a predetermined portion of a mask pattern, the method comprising:

   detecting a fingerprint of the mask pattern in noise of the data sets; and
   determining offsets based on the fingerprint of the mask pattern.

2. A method according to claim 1 wherein detecting a fingerprint of the mask pattern comprises determining correlations between the data sets for different trial offset values.

3. A method according to claim 2 wherein determining correlations comprises determining correlations between pairs of data sets and an average data set.

4. A method according to claim 2 or 3 wherein determining correlations comprises using a fast Fourier transform.

5. A method according to claim 2, 3 or 4 wherein determining correlations is an iterative process.

6. A method according to any one of the preceding claims wherein the fingerprint of the mask pattern results from noise in the mask pattern.

7. A method according to any one of the preceding claims wherein the mask pattern comprises a series of continuous parallel lines extending across the sampling areas.

8. A method according to claim 6 wherein the data sets represent contours of the continuous parallel lines in the sampling areas.

9. A method according to any one of the preceding claims further comprising decomposing noise in the datasets based on the offsets.

10. A method according to any one of the preceding claims wherein at least one of the data sets represents a pattern formed in resist on a substrate or a pattern that has been transferred into the substrate.

11. A method according to any one of the preceding claims wherein at least one of the data sets represents a pattern formed in resist on a substrate and at least another of the data sets represents a pattern that has been transferred into the substrate.

12. A method according to claim 11 further comprising determining a characteristic of a pattern transfer process based on the data sets that represent a pattern formed in resist on a substrate and the data sets that represent a pattern that has been transferred into the substrate and the offsets.

13. An inspection method comprising:

using a scanning electron microscope to obtain a plurality of SEM images by scanning a plurality of copies of a predetermined pattern in one or more samples;
extracting a contour of a line in each of the plurality of SEM images to obtain a plurality of line contours;
determining an initial set of offsets for each of the line contours;
calculating a mean contour based on the line contours and the initial set of offsets; and
iteratively calculating an improved set of offsets that maximises the correlation between each of the contour lines and the mean contour and updating the mean contour.

14. A computer program product comprising a non-transitory computer readable medium having instructions recorded thereon, the instructions, when executed by a computer or a controller of a scanning electron microscope, implementing the method of any of the above claims.

15. A system comprising:

a scanning electron microscope (SEM) configured to scan with an electron beam and generate an image; and
a non-transitory machine-readable medium storing instructions which, when executed by a processor, cause the processor in co-operation with the SEM to perform the method of anyone of claims 1 to 14.

# Fig. 1

Fig. 2

# Fig. 3

S301 — | Obtain multiple sample images |

| Align images based on mask noise | — S302

S303 — | Decompose error contributions by source |

| Remedial action | — S304

# Fig. 4

( Start ) — S401

S402 — | Determine initial offsets |

S403 — | Determine mean of all lines based on offsets |

S404 — | Determine improved offset for line n |

S405 — | Adjust mean line based on improved offset |

S406 — < Termination criteria met ? > — No

Yes

( End ) — S407

## Fig. 5

Pairwise alignment

## Fig. 6

Iteration 1

# Fig. 7

Iteration 3

# Fig. 8

Iteration 1

## Fig. 9

Iteration 5

## Fig. 10

Europäisches
Patentamt

European
Patent Office

Office européen
des brevets

## PARTIAL EUROPEAN SEARCH REPORT

under Rule 62a and/or 63 of the European Patent Convention.
This report shall be considered, for the purposes of
subsequent proceedings, as the European search report

**Application Number**

**EP 21 20 2040**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TAO FEI ET AL: "Wafer Image Registration Based on Hough Transform", APPLIED MECHANICS AND MATERIALS, vol. 333-335, 1 July 2013 (2013-07-01), pages 1038-1042, XP055939201, DOI: 10.4028/www.scientific.net/AMM.333-335.1038 | 1,7,8, 10,14,15 | INV. G06T7/00 G06T7/37 |
| A | * abstract * <br> * figures 1,3-7 * <br> * page 1039 – page 1041 * <br> * Table 1 * | 2-6,9, 11,12 | |
| X | EP 3 789 826 A1 (ASML NETHERLANDS BV [NL]) 10 March 2021 (2021-03-10) | 1,2,4,5, 10,11, 14,15 | |
| A | * paragraphs [0002], [0005], [0041] – [0046] * | 3,6-9,12 | |

| TECHNICAL FIELDS SEARCHED (IPC) |
|---|
| G06T |

### INCOMPLETE SEARCH

The Search Division considers that the present application, or one or more of its claims, does/do
not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Munich | 6 July 2022 | Eveno, Nicolas |

EPO FORM 1503 03.82 (P04E07)

Europäisches
Patentamt

European
Patent Office

Office européen
des brevets

**INCOMPLETE SEARCH
SHEET C**

Application Number

EP 21 20 2040

Claim(s) completely searchable:
    1-12, 14, 15

Claim(s) not searched:
    13

Reason for the limitation of the search:

Claims 1,13 have been drafted as separate independent claims.
Under Article 84 in combination with Rule 43(2) EPC, an application may
contain more than one independent claim in a particular category only if
the subject-matter claimed falls within one or more of the exceptional
situations set out in paragraph (a), (b) or (c) of Rule 43(2) EPC. This
is not the case in the present application, however, for the following
reasons (see Guidelines F-IV, 3.2):
- claims 1,13 do not disclose a plurality of interrelated products such
as a plug and a socket (Rule 43(2)(a) EPC);
- claims 1,13 do not disclose different inventive uses of a product (Rule
43(2)(b) EPC);
- claims 1,13 do not disclose alternative solutions to a particular
problem (Rule 43(2)(c) EPC).

The applicant has failed to comply with invitation pursuant to Rule
62a(1) EPC dated 31.03.2022. Consequently, the search report and the
present search opinion are drawn up on the basis of the first independent
claims in each category (Rule 62a(1) EPC), i.e. only claims 1-12,14,15
were searched.

## ANNEX TO THE EUROPEAN SEARCH REPORT
## ON EUROPEAN PATENT APPLICATION NO.

EP 21 20 2040

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2022

| Patent document cited in search report | Publication date | Patent family member(s) | Publication date |
|---|---|---|---|
| EP 3789826 A1 | 10-03-2021 | NONE | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MONTGOMERY, D.C.** Design and Analysis of Experiment. John Wiley & Sons, Inc, 2009